# EUROPEAN PATENT SPECIFICATION

(11) **EP 4 328 813 B1**
(45) Date of publication and mention of the grant of the patent: **18.11.2026**
(21) Application number: 21943111.1
(22) Date of filing: 28.05.2021
(51) Int. Cl.: G06V 10/74, G06V 20/58, G06F 18/2413, G06N 3/08

(54) **DETECTION DEVICE, DETECTION METHOD, AND DETECTION PROGRAM**
DETEKTIONSVORRICHTUNG, DETEKTIONSVERFAHREN UND DETEKTIONSPROGRAMM
DISPOSITIF DE DÉTECTION, PROCÉDÉ DE DÉTECTION ET PROGRAMME DE DÉTECTION

(43) Date of publication of application: 28.02.2024
(73) Proprietor: NTT, Inc., Tokyo 100-8116 (JP)
(72) Inventor: TAKAHASHI, Tomokatsu, Musashino-shi, Tokyo 180-8585 (JP); YAMADA, Masanori, Musashino-shi, Tokyo 180-8585 (JP); NAGAI, Tomohiro, Musashino-shi, Tokyo 180-8585 (JP); YAMANAKA, Yuki, Musashino-shi, Tokyo 180-8585 (JP)
(74) Representative: Hoffmann Eitle
(86) International application number: PCT/JP2021/020487
(87) International publication number: WO 2022/249472

(56) References cited:
- JP-A- 2020 200 033
- RICHARD ZHANG ET AL: "The Unreasonable Effectiveness of Deep Features as a Perceptual Metric", 2018 IEEE/CVF CONFERENCE ON COMPUTER VISION AND PATTERN RECOGNITION, IEEE, 18 June 2018 (2018-06-18), pages 586 - 595, XP033476019, DOI: 10.1109/CVPR.2018.00068
- CASSIDY LAIDLAW ET AL: "Perceptual Adversarial Robustness: Defense Against Unseen Threat Models", ARXIV.ORG, CORNELL UNIVERSITY LIBRARY, 201 OLIN LIBRARY CORNELL UNIVERSITY ITHACA, NY 14853, 25 January 2021 (2021-01-25), XP081864786
- KIMIN LEE ET AL: "A Simple Unified Framework for Detecting Out-of-Distribution Samples and Adversarial Attacks", ARXIV.ORG, CORNELL UNIVERSITY LIBRARY, 201 OLIN LIBRARY CORNELL UNIVERSITY ITHACA, NY 14853, 11 July 2018 (2018-07-11), XP081415333
- CASSIDY LAIDLAW ET AL: "Functional Adversarial Attacks", ARXIV.ORG, CORNELL UNIVERSITY LIBRARY, 201 OLIN LIBRARY CORNELL UNIVERSITY ITHACA, NY 14853, 29 May 2019 (2019-05-29), XP081515407
- KIMIN LEE; KIBOK LEE; HONGLAK LEE; JINWOO SHIN: "A Simple Unified Framework for Detecting Out-of-Distribution Samples and Adversarial Attacks", ARXIV.ORG, 11 July 2018 (2018-07-11), XP081415333
- CASSIDY LAIDLAW; SOHEIL FEIZI: "Functional Adversarial Attacks", ARXIV.ORG, 29 May 2019 (2019-05-29), XP081515407

## Description

### [Technical Field]

The present invention relates to a detection device, a detection method, and a detection program.

### [Background Art]

There has been known an Adversarial Example which is an adverse sample created by artificially adding a minute noise to data, which is to be input to a deep learning model, so as to disturb an output (see NPL 1). For example, an Adversarial Example of an image has the problem of misclassifying the output of deep learning without changing its appearance and without human recognition. For example, there is a threat that the type of a sign recognized by an automated vehicle is changed to another type. Accordingly, since the Adversarial Example poses a major threat for the safety of AI services, the creation of countermeasure techniques for it in deep learning is expected.

Measures against the Adversarial Example are classified into several groups according to its policy. For example, there are four typical policies as follows: (1) a robust deep learning model capable of normally classifying an Adversarial Example is learned; (2) an Adversarial Example is detected and removed before being input to the deep learning model; (3) delete perturbation added to the Adversarial Example, to restore the original data; (4) disturb the use of model information necessary for creating the Adversarial Example.

### [Citation List]

### [Non Patent Literature]

[NPL 1] Ian J. Goodfellow et al., "EXPLAINING AND HARNESSING ADVERSARIAL EXAMPLES," [online], March 2015, [Searched on April 26, 2021] Internet <URL:http://https://arxiv.org/abs/1412.6572>
[NPL 2] RICHARD ZHANG ET AL: "The Unreasonable Effectiveness of Deep Features as a Perceptual Metric", 2018 IEEE/CVF CONFERENCE ON COMPUTER VISION AND PATTERN RECOGNITION, IEEE, 18 June 2018 (2018-06-18), pages 586-595, XP033476019, DOI: 10.1109/CVPR.2018.00068 refers to evaluating perceptual metrics through human judgments on image distortions. This includes traditional distortions, CNN-based distortions, and outputs from real algorithms such as superresolution, frame interpolation, and video deblurring. Learned Perceptual Image Patch Similarity LPIPS is described in D1 to measure the perceptual similarity between image patches.
[NPL3] CASSIDY LAIDLAW ET AL: "Perceptual Adversarial Robustness: Defense Against Unseen Threat Models", ARXIV.ORG, CORNELL UNIVERSITY LIBRARY, 201 OLIN LIBRARY CORNELL UNIVERSITY ITHACA, NY 14853, 25 January 2021 (2021-01-25), XP081 864786, refers to perceptual adversarial robustness by adversarial training against the set of all imperceptible adversarial examples.

### [Summary of Invention]

### [Technical Problem]

However, there is no conventional technology that can perfectly prevent the Adversarial Example. On the other hand, since the countermeasures can be taken without modifying the deep learning model, a technique for detecting and removing Adversarial Example before it is input to the deep learning model as described in (2) above has been attracting attention.

The present invention has been made in view of the above, and an object of the present invention is to detect and remove an Adversarial Example before inputting it into a deep learning model.

### [Solution to Problem]

The object of the invention is solved by the subject matter of the independent claims. Advantageous embodiments of the invention are disclosed in the dependent Claims. A detection device according to an example includes: an acquisition unit configured to acquire data to be detected and normal reference data; a calculation unit configured to calculate a Learned Perceptual Image Patch Similarity (LPIPS) distance between the acquired data and the reference data; and a classification unit configured to classify the acquired data into either a Clean Sample or an Adversarial Example by using the calculated LPIPS distance.

### [Advantageous Effects of Invention]

According to the present invention, it is possible to detect and remove an Adversarial Example before inputting it into a deep learning model.

### [Brief Description of Drawings]

[Fig. 1] Fig. 1 is a diagram for describing an outline of a detection device according to the present embodiment.
[Fig. 2] Fig. 2 is a diagram for describing an outline of a detection device according to the present embodiment.
[Fig. 3] Fig. 3 is a schematic diagram illustrating a schematic configuration of the detection device according to the present embodiment.
[Fig. 4] Fig. 4 is a flow chart showing a detection processing procedure.
[Fig. 5] Fig. 5 is a diagram for describing an example.
[Fig. 6] Fig. 6 is a diagram for describing an example.
[Fig. 7] Fig. 7 is a diagram showing an example of a computer that executes a detection program.

### [Description of Embodiments]

An embodiment of the present invention will be described hereinafter in detail with reference to the drawings. Note that the present invention is not limited to the embodiment. Furthermore, the same constituent elements are denoted by the same reference numerals in the descriptions of the drawings.

### [Overview of Detection Device]

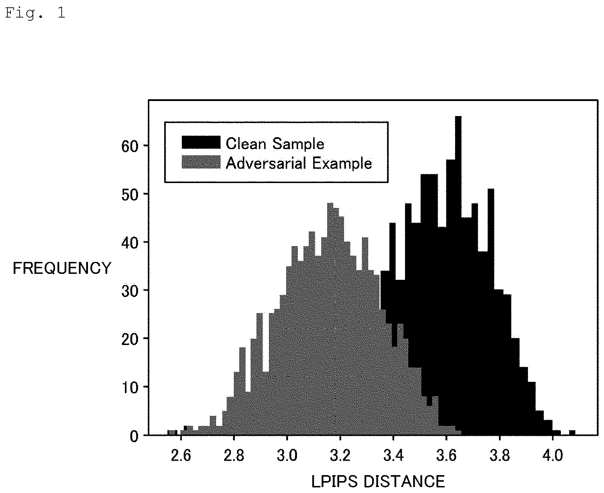

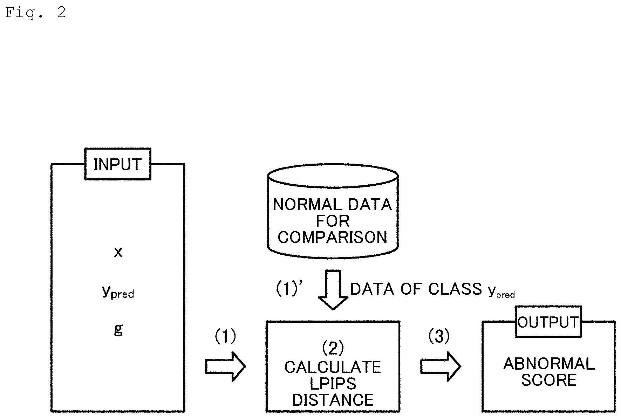

Figs. 1 and 2 are diagrams for explaining an outline of a detection device according to the present embodiment. The detection device of the present embodiment detects an Adversarial Example by using an LPIPS (Learned Perceptual Image Patch Similarity) distance which is the latest index for measuring the distance between images.

Here, the LPIPS distance is an index for measuring the distance between images by normalizing an intermediate output of a deep learning model for each channel and obtaining a difference, the index being a value calculated as shown by the following equation (1).

[Math. 1] $\left.\begin{matrix}LPIPS \left({x}_{1}, {x}_{2}\right) = {\left‖ϕ\left({x}_{1}\right)-ϕ\left({x}_{2}\right)\right‖}_{2} \\ ϕ \left(x\right) = \left(\frac{{\hat{g}}_{1} \left(x\right)}{\sqrt{{W}_{1} {H}_{1}}},…,\frac{{\hat{g}}_{L} \left(x\right)}{\sqrt{{W}_{L} {H}_{L}}}\right) \\ {\hat{g}}_{l} \left(x\right) = \left({\hat{g}}_{l 1}\left(x\right),…,{\hat{g}}_{IC}\left(x\right)\right) \\ {\hat{g}}_{lc} \left(x\right) = \frac{{g}_{lc} \left(x\right)}{{\sum }_{w}^{W} {\sum }_{h}^{H} {g}_{lcwh} \left(x\right)}\end{matrix}\right\}$ (1) Where
*gₗ*(*x*) : Output of *l* layer
*g_{lc}*(*x*) :Output of channel *c* of *l* layer
*Wₗ* : Vertical size of output of *l* layer
*Hₗ* : Horizontal size of output of *l* layer

Further, as shown in Fig. 1, it is found that the LPIPS distance with the reference data, which is normal data for comparison with an Adversarial Example and a Clean Sample, is different between the Adversarial Example and the Clean Sample which is normal data.

Therefore, the detection device classifies the Adversarial Example and the Clean Sample according to the difference in LPIPS distance, thereby detecting the Adversarial Example.

Specifically, as shown in Fig. 2, the detection device accepts inputs of data x to be detected, its prediction class y_pred, a deep learning model g, and data belonging to class y_pred out of the reference data which is normal data for comparison (shown in (1), (1)' in Fig. 2). The detection device also calculates the LPIPS distance between the data x and the reference data belonging to class y_pred ((2) shown in Fig. 2), and outputs the minimum value out of these values as an abnormality score ((3) shown in Fig. 2). Then, the detection device classifies the data x into normal/abnormal states, that is, into Clean Sample/Adversarial Example, by using the abnormality score.

Thus, the detection device detects and removes the Adversarial Example before inputting it to the deep learning model g, allowing for countermeasures against the Adversarial Example without modifying the deep learning model g.

### [Configuration of Detection Device]

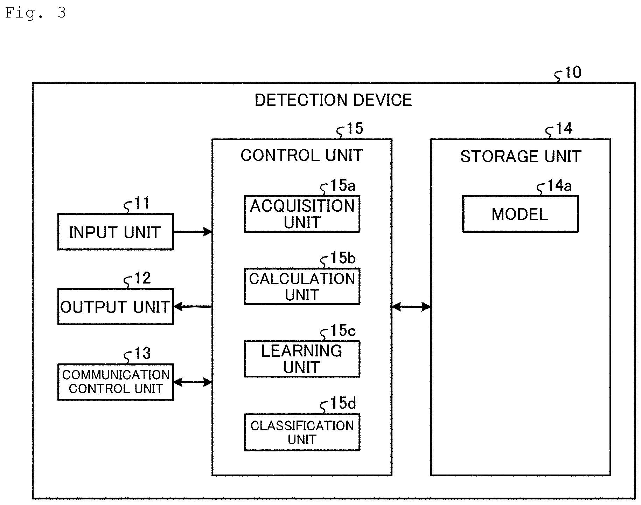

Fig. 3 is a schematic diagram illustrating a schematic configuration of the detection device according to the present embodiment. As exemplified in Fig. 3, a detection device 10 according to the present embodiment is implemented by a general computer such as a personal computer, and includes an input unit 11, an output unit 12, a communication control unit 13, a storage unit 14, and a control unit 15.

The input unit 11 is realized by using an input device such as a keyboard or a mouse, and inputs various pieces of instruction information, such as start of processing, to the control unit 15 in response to an input operation from an operator. The output unit 12 is realized by a display device such as a liquid crystal display, a printing device such as a printer, or the like. For example, a result of detection processing to be described below is displayed on the output unit 12.

The communication control unit 13 is implemented by, for example, a Network Interface Card (NIC), and controls electric communication between the control unit 15 and an external device via a telecommunication line such as a Local Area Network (LAN) or the Internet. For example, the communication control unit 13 controls communication between the control unit 15 and a management device or the like that manages data to be subjected to detection processing.

The storage unit 14 is realized by a semiconductor memory element such as a RAM (Random Access Memory) or a flash memory, or a storage device such as a hard disk or an optical disc. The storage unit 14 stores in advance, for example, a processing program that operates the detection device 10 and data to be used during execution of the processing program, or the storage unit 14 stores the processing program and the data temporarily every time the processing is executed. In the present embodiment, the storage unit 14 stores a model 14a used for detection processing to be described below. Note that the storage unit 14 may also be configured to communicate with the control unit 15 via the communication control unit 13.
the control unit 15 is implemented by using a CPU (Central Processing Unit) or the like, and executes a processing program stored in a memory. Thus, the control unit 15 functions as an acquisition unit 15a, a calculation unit 15b, a learning unit 15c, and a classification unit 15d, as illustrated in Fig. 2. Note that each or some of these functional units may be mounted on a different piece of hardware. For example, the learning unit 15c may be mounted on hardware different from other functional units. Also, the control unit 15 may include another functional unit.

The acquisition unit 15a acquires data to be detected and normal reference data. For example, the acquisition unit 15a acquires data to be subjected to detection processing described later and the reference data which is the normal data for comparison, from the management device or the like via the input unit 11 or the communication control unit 13. The acquisition unit 15a may store the acquired data and the reference data into the storage unit 14. In this case, the calculation unit 15b described later acquires the data and the reference data from the storage unit 14 and executes processing.

The calculation unit 15b calculates an LPIPS distance between the acquired data and the reference data. Specifically, the calculation unit 15b calculates the LPIPS distance between the data x to be detected and the reference data which is the normal data for comparison, according to the equation (1), as described above. The calculation unit 15b delivers the minimum value among LPIPS distances calculated between each pieces of data and a plurality of pieces of reference data, as an abnormality score of the data, to the learning unit 15c and the classification unit 15d described later.

The learning unit 15c learns the model 14a for classifying data into normal or abnormal by using the calculated LPIPS distance as an abnormality score. Specifically, the learning unit 15c generates the model 14a for classifying each piece of data by learning, so that the abnormality score of each piece of data calculated by the calculation unit 15b, that is, the LPIPS distance, follows the distribution illustrated in Fig. 1. The generated model 14a outputs whether the input data are normal data, that is, Clean Sample, or abnormal data, that is, Adversarial Example.

The classification unit 15d classifies the acquired data into either a Clean Sample or an Adversarial Example by using the calculated LPIPS distance. Specifically, the classification unit 15d classifies the acquired data into either normal Clean Sample or abnormal Adversarial Example by using the model 14a for classifying the data into either normal or abnormal, with the calculated LPIPS distance as an abnormality score. That is, the classification unit 15d classifies the acquired data to be detected, into either normal data, that is, Clean Sample, or abnormal data, that is, Adversarial Example, by using the learned model 14a.

Also, when an Adversarial Example is detected, the classification unit 15d outputs the Adversarial Example to the output unit 12.

Therefore, the detection device 10 can detect an Adversarial Example accurately. Therefore, the Adversarial Example is removed before being input to the deep learning model g, and countermeasures against the Adversarial Example can be taken without modifying the deep learning model g.

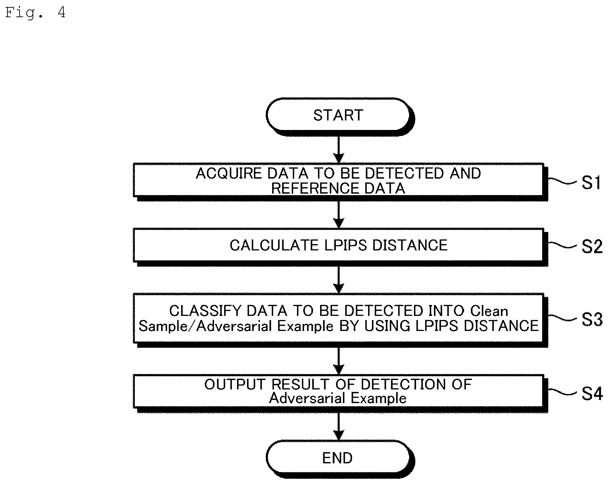

[Detection Processing] Next, the detection processing by the detection device 10 according to the present embodiment is described with reference to Fig. 4. Fig. 4 is a flow chart illustrating a detection processing procedure. The flow chart shown in Fig. 4 starts at the timing when the user makes an operation input indicating the start.

First, the acquisition unit 15a acquires data to be detected and reference data (step S1). For example, the acquisition unit 15a acquires data to be subjected to the detection processing and reference data which is the normal data for comparison, via the input unit 11 or the communication control unit 13.

Next, the calculation unit 15b calculates an LPIPS distance between the acquired data to be detected and the reference data (step S2). The calculation unit 15b delivers the minimum value out of the LPIPS distances calculated between each piece of data and a plurality of pieces of reference data, to the classification unit 15d, as an abnormality score of the data.

The calculation unit 15b may deliver the calculated abnormality score to the learning unit 15c. In this case, the learning unit 15c learns the model 14a for classifying the data into normal or abnormal, and stores the generated model 14a in the storage unit 14.

Then, the classification unit 15d classifies the acquired data into either a Clean Sample or an Adversarial Example by using the calculated LPIPS distance (step S3). Specifically, the classification unit 15d classifies the acquired data to be detected, into either normal data, that is, Clean Sample, or abnormal data, that is, Adversarial Example, by using the learned model 14a.

Also, when an Adversarial Example is detected, the classification unit 15d outputs the Adversarial Example to another device or the like as a detection result via the output unit 12 and the communication control unit 13 (step S4). In this manner, a series of detection processing are finished.

[Effects] As described above, in the detection device 10 of the present embodiment, the acquisition unit 15a acquires the data to be detected and the normal reference data. The calculation unit 15b calculates an LPIPS distance between the acquired data and the reference data. The classification unit 15d also classifies the acquired data into either a Clean Sample or an Adversarial Example by using the calculated LPIPS distance.

Specifically, the classification unit 15d classifies the acquired data into either a normal Clean Sample or an abnormal Adversarial Example by using the model 14a for classifying the data into either normal or abnormal, with the calculated LPIPS distance as an abnormality score.

Therefore, the detection device 10 can detect an Adversarial Example accurately. Therefore, the Adversarial Example is removed before being input to the deep learning model, and countermeasures against the Adversarial Example, which is a major threat to the safety of AI services, can be taken without modifying the deep learning model. Thus, the detection device 10 can secure the safety of AI services.

The learning unit 15c learns the model 14a for classifying the data into normal or abnormal by using the calculated LPIPS distance as an abnormality score. Therefore, the detection device 10 can accurately detect an Adversarial Example that continues to change day by day.

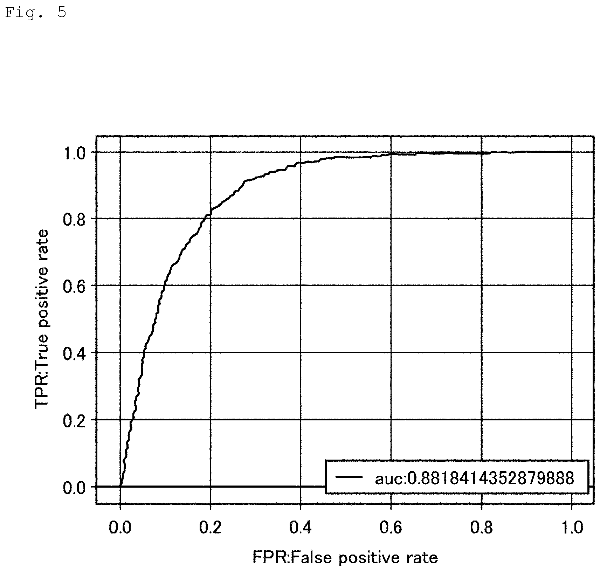

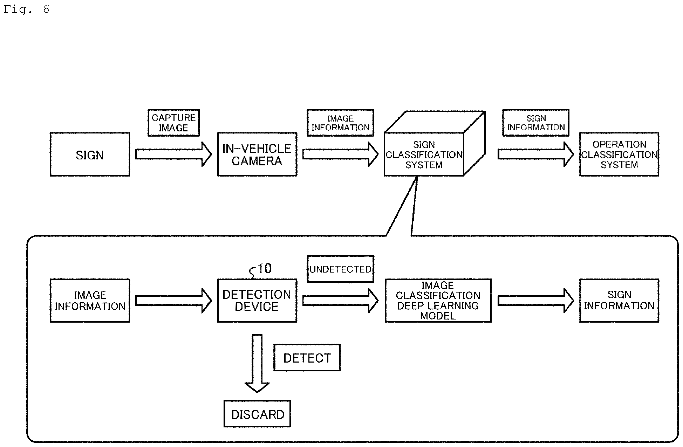

[Example] Figs. 5 and 6 are diagrams for explaining an example. Fig. 5 is a ROC (Receiver Operating Characteristic Curve) curve showing the result of the detection process of the above-described embodiment with respect to the Adversarial Example and Clean Sample shown in the histogram of Fig. 1. In the present example, ResNet 18 is applied for the deep learning model, cifar10 is applied for the data set, and PGD (see "https://arxiv.org/abs/1706.06083") is applied for the Adversarial Example.

As a result, in the example shown in Fig. 5, an AUC (Area Under Curve) value of the ROC curve, which indicates that the closer to 1 the model is, the higher the performance, is 0.88, confirming that Adversarial Example can be detected with high accuracy.

Fig. 6 illustrates an example of applying the detection device 10 according to the foregoing embodiment to a sign classification system. In the sign classification system shown in Fig. 6, in the detection device 10, the acquisition unit 15a acquires a sign photographed by a camera as data to be detected, and the classification unit 15d detects an Adversarial Example. Then, the detection device 10 discards an Adversarial Example when the Adversarial Example is detected, and inputs the Adversarial Example to the deep learning model when the Adversarial Example is not detected. Thus, for example, erroneous recognition of a sign by an automated vehicle is prevented, and safety of vehicle body control can be secured.

[Program] It is also possible to create a program in which the processing executed by the detection device 10 according to the foregoing embodiment is described in a language executable by a computer. As one embodiment, the detection device 10 can be implemented by installing a detection program for executing the detection processing as package software or online software in a desired computer. For example, by causing an information processing device to execute the detection program, the information processing device can be caused to function as the detection device 10. The information processing device described herein can be a desktop type or laptop type personal computer. In addition, the information processing device can be a mobile communication terminal such as a smartphone, a mobile phone, and a PHS (Personal Handyphone System), and a slate terminal such as a PDA (Personal Digital Assistant). The function of the detection device 10 may be implemented by a cloud server.

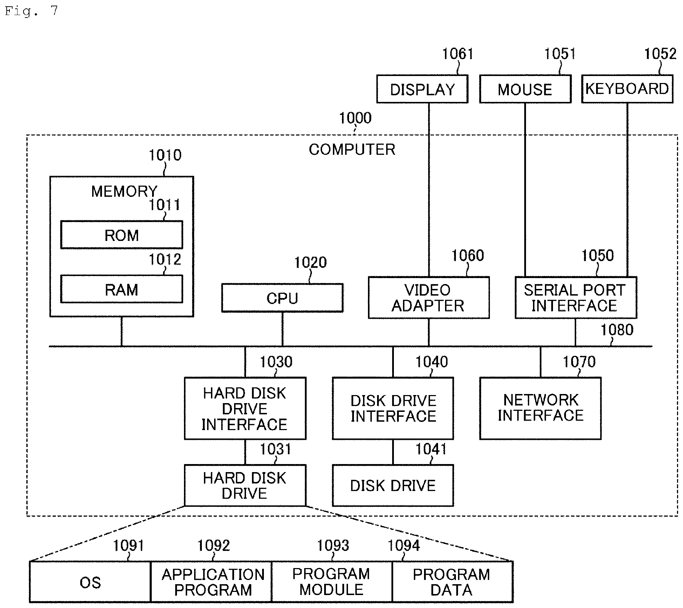

Fig. 7 is a diagram illustrating an example of a computer that executes the detection program. A computer 1000 has a memory 1010, a CPU 1020, a hard disk drive interface 1030, a disk drive interface 1040, a serial port interface 1050, a video adapter 1060, and a network interface 1070, for example. These units are connected by a bus 1080.

The memory 1010 includes a ROM (Read Only Memory) 1011 and a RAM 1012. The ROM 1011 stores, for example, a boot program such as a BIOS (Basic Input Output System). The hard disk drive interface 1030 is connected to a hard disk drive 1031. The disk drive interface 1040 is connected to a disk drive 1041. A removable storage medium such as a magnetic disk or an optical disk is inserted into the disk drive 1041. For example, a mouse 1051 and a keyboard 1052 are connected to the serial port interface 1050. For example, a display 1061 is connected to the video adapter 1060.

Here, the hard disk drive 1031 stores, for example, an OS 1091, an application program 1092, a program module 1093, and program data 1094. Each of the pieces of information described in the above embodiment is stored in, for example, the hard disk drive 1031 or the memory 1010.

The detection program is stored in the hard disk drive 1031 as the program module 1093 in which commands executed by the computer 1000 are described, for example. Specifically, the program module 1093 describing each processing to be executed by the detection device 10 described in the foregoing embodiment is stored in the hard disk drive 1031.

The data used for information processing by the detection program is stored in the hard disk drive 1031, for example, as the program data 1094. Thereafter, the CPU 1020 reads out the program module 1093 and the program data 1094 stored in the hard disk drive 1031 to the RAM 1012 when necessary, and executes each of the above-described procedures.

Note that the program module 1093 and program data 1094 related to the detection program are not limited to being stored in the hard disk drive 1031, and may also be stored in, for example, a removable storage medium and read out by the CPU 1020 via the disk drive 1041, or the like. Alternatively, the program module 1093 and the program data 1094 related to the detection program may be stored in another computer connected via a network such as a LAN or WAN (Wide Area Network), and may be read by the CPU 1020 via the network interface 1070.

Although the embodiments to which the invention made by the inventor thereof is applied have been described above, the present invention is not limited by the descriptions and drawings forming a part of the disclosure of the present invention according to the embodiments. That is to say, other embodiments, examples, operation techniques, and the like made by those skilled in the art on the basis of the embodiments are all included in the scope of the present invention.

### [Reference Signs List]

- 10: Detection device
- 11: Input unit
- 12: Output unit
- 13: Communication control unit
- 14: Storage unit
- 14a: Model
- 15: Control unit
- 15a: Acquisition unit
- 15b: Calculation unit
- 15c: Learning unit
- 15d: Classification unit

## Claims

1. A detection device (10) comprising:
an acquisition unit (15a) configured to acquire data to be detected and the prediction class (y_pred) of the data to be detected and to acquire normal reference data of the prediction class (y_pred) of the data to be detected;
a calculation unit (15b) configured to calculate a Learned Perceptual Image Patch Similarity, LPIPS, distance between the data to be detected and the reference data of the prediction class (y_pred) of the data to be detected;
a classification unit (15d) configured to classify the data to be detected into either a clean sample or an adversarial example by using the calculated LPIPS distance;
a unit for discarding the data to be detected, if the data to be detected is classified as an adversarial example; and
a unit for inputting the data to be detected into a deep learning model, if the data to be detected is not classified as an adversarial example.

2. The detection device (10) according to claim 1, wherein the classification unit (15d) classifies the data to be detected into either a normal Clean Sample or an abnormal Adversarial Example by using a model for classifying the data into normal or abnormal, using the calculated LPIPS distance as an abnormality score.

3. The detection device (10) according to claim 2, further including: a learning unit (15c) configured to learn the model for classifying data into normal or abnormal, using the calculated LPIPS distance as an abnormality score.

4. The detection device (10) according to claim 1, wherein the acquisition unit (15a) acquires a sign photographed by a camera, as the data to be detected, and
the classification unit (15d) detects an Adversarial Example.

5. A detection method to be executed by a detection device (10), the detection method comprising:
an acquisition step of acquiring data to be detected and the prediction class (y_ored) of the data to be detected and of acquiring normal reference data of the prediction class (y_pred) of the data to be detected;
a calculation step of calculating a Learned Perceptual Image Patch Similarity (LPIPS) distance between the data to be detected and the reference data of the prediction class (y_pred) of the data to be detected;
a classification step of classifying the data to be detected into either a Clean Sample or an Adversarial Example by using the calculated LPIPS distance;
a step of discarding the data to be detected, if the data to be detected is classified as an adversarial example; and
a step of inputting the data to be detected into a deep learning model, if the data to be detected is not classified as an adversarial example.

6. A detection program that causes a computer (1000) to execute:
an acquisition step of acquiring data to be detected and the prediction class (y_pred) of the data to be detected and normal reference data of the prediction class (y_pred) of the data to be detected;
a calculation step of calculating a Learned Perceptual Image Patch Similarity, LPIPS, distance between the data to be detected and the reference data of the prediction class (y_pred) of the data to be detected;
a classification step of classifying the data to be detected into either a Clean Sample or an Adversarial Example by using the calculated LPIPS distance;
a step of discarding the data to be detected, if the data to be detected is classified as an adversarial example; and
a step of inputting the data to be detected into a deep learning model, if the data to be detected is not classified as an adversarial example.

## Patentansprüche

1. Detektionsvorrichtung (10), umfassend:
eine Erfassungseinheit (15a), die ausgebildet ist, zu detektierende Daten und die Vorhersageklasse (y_pred) der zu detektierenden Daten zu erfassen und normale Referenzdaten der Vorhersageklasse (y_pred) der zu detektierenden Daten zu erfassen;
eine Berechnungseinheit (15b), die ausgebildet ist, eine Learned Perceptual Image Patch Similarity, LPIPS, Distanz zwischen den zu detektierenden Daten und den Referenzdaten der Vorhersageklasse (y_pred) der zu detektierenden Daten zu berechnen;
eine Klassifizierungseinheit (15d), die ausgebildet ist, die zu detektierenden Daten entweder in ein Clean Sample oder in ein Adversarial Example zu klassifizieren, unter Verwendung der berechneten LPIPS-Distanz;
eine Einheit zum Verwerfen der zu detektierenden Daten, wenn die zu detektierenden Daten als ein Adversarial Example klassifiziert werden; und
eine Einheit zum Eingeben der zu detektierenden Daten in ein Deep-Learning-Modell, wenn die zu detektierenden Daten nicht als ein Adversarial Example klassifiziert werden.

2. Detektionsvorrichtung (10) nach Anspruch 1, wobei die Klassifizierungseinheit (15d) die zu detektierenden Daten entweder in ein normales Clean Sample oder in ein abnormales Adversarial Example klassifiziert, unter Verwendung eines Modells zum Klassifizieren der Daten in normal oder abnormal, wobei die berechnete LPIPS-Distanz als ein Abnormalitätsscore verwendet wird.

3. Detektionsvorrichtung (10) nach Anspruch 2, weiter einschließend: eine Lerneinheit (15c), die ausgebildet ist, das Modell zum Klassifizieren von Daten in normal oder abnormal zu lernen, wobei die berechnete LPIPS-Distanz als ein Abnormalitätsscore verwendet wird.

4. Detektionsvorrichtung (10) nach Anspruch 1, wobei die Erfassungseinheit (15a) ein von einer Kamera aufgenommenes Schild als die zu detektierenden Daten erfasst, und
die Klassifizierungseinheit (15d) ein Adversarial Example detektiert.

5. Detektionsverfahren, das von einer Detektionsvorrichtung (10) ausgeführt wird, wobei das Detektionsverfahren Folgendes umfasst:
einen Erfassungsschritt des Erfassens von zu detektierenden Daten und der Vorhersageklasse (y_pred) der zu detektierenden Daten und des Erfassens normaler Referenzdaten der Vorhersageklasse (y_pred) der zu detektierenden Daten;
einen Berechnungsschritt des Berechnens einer Learned Perceptual Image Patch Similarity (LPIPS)-Distanz zwischen den zu detektierenden Daten und den Referenzdaten der Vorhersageklasse (y_pred) der zu detektierenden Daten;
einen Klassifizierungsschritt des Klassifizierens der zu detektierenden Daten entweder in ein Clean Sample oder in ein Adversarial Example unter Verwendung der berechneten LPIPS-Distanz;
einen Schritt des Verwerfens der zu detektierenden Daten, wenn die zu detektierenden Daten als ein Adversarial Example klassifiziert werden; und
einen Schritt des Eingebens der zu detektierenden Daten in ein Deep-Learning-Modell, wenn die zu detektierenden Daten nicht als ein Adversarial Example klassifiziert werden.

6. Detectionsprogramm, das einen Computer (1000) zur Ausführung veranlasst:
einen Erfassungsschritt des Erfassens von zu detektierenden Daten und der Vorhersageklasse (y_pred) der zu detektierenden Daten und normaler Referenzdaten der Vorhersageklasse (y_pred) der zu detektierenden Daten;
einen Berechnungsschritt des Berechnens einer Learned Perceptual Image Patch Similarity, LPIPS, Distanz zwischen den zu detektierenden Daten und den Referenzdaten der Vorhersageklasse (y_pred) der zu detektierenden Daten;
einen Klassifizierungsschritt des Klassifizierens der zu detektierenden Daten entweder in ein Clean Sample oder in ein Adversarial Example unter Verwendung der berechneten LPIPS-Distanz;
einen Schritt des Verwerfens der zu detektierenden Daten, wenn die zu detektierenden Daten als ein Adversarial Example klassifiziert werden; und
einen Schritt des Eingebens der zu detektierenden Daten in ein Deep-Learning-Modell, wenn die zu detektierenden Daten nicht als ein Adversarial Example klassifiziert werden.

## Revendications

1. Dispositif de détection (10) comprenant :
une unité d'acquisition (15a) configurée pour acquérir des données à détecter et la classe prédite (y_pred) des données à détecter et pour acquérir des données de référence normales de la classe prédite (y_pred) des données à détecter ;
une unité de calcul (15b) configurée pour calculer une distance de similarité perceptuelle de carreau d'image apprise, LPIPS, entre les données à détecter et les données de référence de la classe prédite (y_pred) des données à détecter ;
une unité de classification (15d) configurée pour classifier les données à détecter comme étant soit un échantillon propre soit un exemple adverse en utilisant la distance LPIPS calculée ;
une unité pour écarter les données à détecter, si les données à détecter sont classifiées comme étant un exemple adverse ; et
une unité pour entrer les données à détecter dans un modèle d'apprentissage profond, si les données à détecter ne sont pas classifiées comme étant un exemple adverse.

2. Dispositif de détection (10) selon la revendication 1, dans lequel l'unité de classification (15d) classifie les données à détecter comme étant soit un échantillon propre normal soit un exemple adverse anormal en utilisant un modèle pour classifier les données comme normales ou anormales, en utilisant la distance LPIPS calculée comme score d'anomalie.

3. Dispositif de détection (10) selon la revendication 2, incluant en outre : une unité d'apprentissage (15c) configurée pour apprendre le modèle pour classifier des données comme normales ou anormales, en utilisant la distance LPIPS calculée comme score d'anomalie.

4. Dispositif de détection (10) selon la revendication 1, dans lequel l'unité d'acquisition (15a) acquiert un signe photographié par une caméra, représentant les données à détecter, et
l'unité de classification (15d) détecte un exemple adverse.

5. Procédé de détection à mettre en œuvre par un dispositif de détection (10), le procédé de détection comprenant :
une étape d'acquisition consistant à acquérir des données à détecter et la classe prédite (y pred) des données à détecter et à acquérir des données de référence normales de la classe prédite (y_pred) des données à détecter ;
une étape de calcul consistant à calculer une distance de similarité perceptuelle de carreau d'image apprise (LPIPS) entre les données à détecter et les données de référence de la classe prédite (y pred) des données à détecter ;
une étape de classification consistant à classifier les données à détecter comme étant soit un échantillon propre soit un exemple adverse en utilisant la distance LPIPS calculée ;
une étape consistant à écarter les données à détecter, si les données à détecter sont classifiées comme étant un exemple adverse ; et
une étape consistant à entrer les données à détecter dans un modèle d'apprentissage profond, si les données à détecter ne sont pas classifiées comme étant un exemple adverse.

6. Programme de détection qui amène un ordinateur (1000) à mettre en œuvre :
une étape d'acquisition consistant à acquérir des données à détecter et la classe prédite (y-pred) des données à détecter et des données de référence normales de la classe prédite (y_pred) des données à détecter ;
une étape de calcul consistant à calculer une distance de similarité perceptuelle de carreau d'image apprise, LPIPS, entre les données à détecter et les données de référence de la classe prédite (y-pred) des données à détecter ;
une étape de classification consistant à classifier les données à détecter comme étant soit un échantillon propre soit un exemple adverse en utilisant la distance LPIPS calculée ;
une étape consistant à écarter les données à détecter, si les données à détecter sont classifiées comme étant un exemple adverse ; et
une étape consistant à entrer les données à détecter dans un modèle d'apprentissage profond, si les données à détecter ne sont pas classifiées comme étant un exemple adverse.
